# EUROPEAN PATENT APPLICATION

(11) **EP 1 608 027 A1**
(43) Date of publication of application: **21.12.2005**
(21) Application number: 04720169.4
(22) Date of filing: 12.03.2004
(51) Int. Cl.: H01L 31/04, H01L 51/20, H01M 14/00

(54) **MATERIAL FOR PHOTOVOLTAIC FILM, SOLAR CELL, PROCESS FOR PRODUCING PHOTOVOLTAIC FILM MATERIAL AND PROCESS FOR PRODUCING PHOTOVOLTAIC FILM**

(30) Priority: 13.03.2003 JP 2003068912
(71) Applicant: Nagae, Yoshiyuki, Kani-shi, Gifu 509-0204 (JP)
(72) Inventor: NAGAE, Yoshiyuki, Kani-shi, Gifu 509-0204 (JP); NAGAE, Kazuko, Kani-shi, Gifu 509-0204 (JP)
(74) Representative: Wiebusch, Manfred
(86) International application number: PCT/JP2004/003254
(87) International publication number: WO 2004/082030

(57) **Abstract**

To provide, in relation to a dye-sensitized solar cell, an inexpensive photovoltaic film material which can solve problems arising from usage of a sensitizing dye comprising an organic substance; and a solar cell having the photovoltaic film.

A photovoltaic film 30 comprises photocatalyst-coated particles which include inorganic material particles, titanium dioxide particles coated on the surface of the inorganic material particles, and lithium particles attached to the inorganic material particles and/or the titanium dioxide particles. The photocatalyst-coated particles are obtained by means of: producing a mixture in which an aqueous solution obtained by means of mixing titanium hydroxide gel and aqueous hydrogen peroxide, powder consisting of the inorganic material particles, and water; leaving to stand a second mixture obtained by means of mixing the mixture and lithium chloride aqueous solution, thereby obtaining a product material in which titanium hydroxide is coated on the surface of the inorganic material particles; and thereafter baking the product material. The photocatalyst-coated particles are formed into paste with the use of a binder, and coated onto a conductive glass plate, to thus form a coating.

## Description

### Technical Field

The present invention relates to a photovoltaic film in a thin film solar cell, the photovoltaic film for generating excitation energy, and to a method for manufacturing the same; as well as to a photovoltaic film material and a solar cell having the photovoltaic film.

### Background Art

In 1991, Graetzel, et al, reported a "dye-sensitized solar cell" (also called a photoelectrochemical cell, a Graetzel solar cell, or the like). In contrast to a silicon solar cell, the solar cell does not employ a silicon semiconductor, has an electrochemical-cell structure with an iodine solution interposed between cells, and employs materials which are inexpensive, as well as easy to fabricate; accordingly, the solar cell is expected to allow production at low cost.

A dye-sensitized solar cell comprises an electrode obtained by means of baking titanium dioxide particles onto a transparent conductive glass plate and causing an organic sensitizing dye, such as a ruthenium complex, to be absorbed; and a counter electrode of an identical conductive glass plate; and is configured such that a gap between the electrodes is filled with an electrolyte solution.

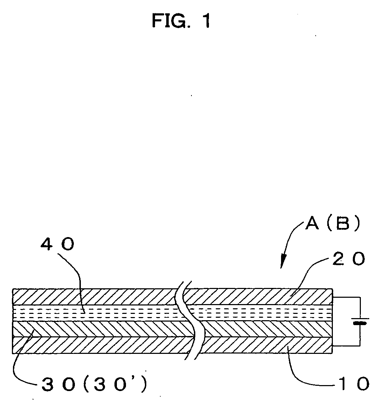

In a specific example, a dye-sensitized solar cell B, which is configured as shown in Fig. 1, comprises a pair of conductive glass plates 10 and 20, a photovoltaic film 30' disposed on the conductive glass plate 10, and an electrolyte layer 40. The conductive glass plate 10 is configured such that a conductive film is formed on a tabular glass, the conductive film being formed on the photovoltaic film 30' side. Similarly, the conductive glass plate 20 is also configured such that a conductive film is formed on a tabular glass, the conductive film being formed on the electrolyte layer 40 side. Meanwhile, as described above, the photovoltaic film 30' comprises titanium dioxide particles on which an organic sensitizing dye is absorbed. The photovoltaic film 30' serves as a photovoltaic film for generating excitation energy. Meanwhile, the electrolyte layer 40 is in such a state that an electrolyte solution is filled therein with the conductive glass plate 20 and a spacer therebetween.

A power generation mechanism in a dye-sensitized solar cell is initiated from, at first, entry of the photovoltaic film 30' into a state in which, upon absorption of light energy, the sensitizing dye is excited. Next, the excitation energy of the sensitizing dye is transmitted to titanium dioxide particles in the form of electrons, thereby further reaching the conductive glass plate 10 and shifting to the conductive glass plate 20 onacounterelectrode. The mechanism allows delivery of electric power at this time. The electrons, which have transited to the counter electrode, subsequently return to the sensitizing dye or to the titanium dioxide particles by way of a redox reaction in the electrolyte solution. It can be said that an electromotive force is obtained through repetition of this cycle.

This solar cell is characterized in that titanium dioxide, which itself can utilize only energy in the ultraviolet range, is supplemented and enhanced by means of addition of the sensitizing dye.

Meanwhile, the configuration of a solar cell is not limited to the configuration shown in Fig. 1; for instance, there is sometimes employed such a configuration that the electrolyte layer 40 is omitted, the photovoltaic film 30' and the conductive glass plate 20 are brought into contact, and the photovoltaic film 30' is impregnated with an electrolyte solution.

In addition, in the conventional solar cell, in order to form a photovoltaic film on a conductive glass plate, usually, baking operation has been performed after a conductive glass plate is coated with paste of a photovoltaic film. More specifically, baking operation has been performed for forming passages between titanium dioxide particles, as well as for fixing the photovoltaic film onto the conductive glass plate.

However, the dye-sensitized solar cell devised by Graetzel employs a sensitizing dye, such as RuL2(NCS)2 #L=4,4'-dicarboxy-2,2' bipyridine, [Ru(dcbpy)2(NCS)2] · 2H2O #dcbpy=2,2'-bipyridyl-4,4'-dicalboxylic acid, each of which is a ruthenium complex. These sensitizing dyes, which are extremely expensive, pose a bottleneck in mass production and industrialization from the viewpoint of cost.

In addition, a problem arising from usage of a sensitizing dye constituted of an organic substance is also present. More specifically, since a sensitizing dye constituted of an organic substance is used, a problem arises in view of a useful life and light resistance of the sensitizing dye. Meanwhile, presence of moisture is known to cause discoloration of a sensitizing dye.

To this end, the present invention aims at providing an inexpensive photovoltaic film material which can solve the problem―arising from usage of a sensitizing dye constituted of an organic substance―, a solar cell having the photovoltaic film, and, furthermore, a method for manufacturing the same.

### Disclosure of the Invention

The present invention has been conceived to solve the above problem. A first aspect of the invention provides a photovoltaic film material, for use in a photovoltaic film to be disposed in a solar cell, characterized by having photocatalyst-coated particles including: inorganic material particles which are particles of an inorganic material; photocatalyst particles coated on the surface of the inorganic material particles; and lithium particles attached onto the inorganic material particles and/or the photocatalyst particles.

The photovoltaic filmmaterial of the first aspect produces a paste-like photovoltaic film material by making use of a binder; and the paste-like photovoltaic film material is coated on a conductive film, such as that disposed on a conductive glass plate; that is, a conductive film serving as an electrode, thereby forming a photovoltaic film. Meanwhile, the photovoltaic film material coated on the conductive film may be baked. While in a state of a photovoltaic film, the inorganic material particles function as a sensitizing dye. Energy excited in the inorganic material particles is transmitted to the photocatalyst particles in the form of electrons. The electrons are sequentially transmitted from one photocatalyst particle to another, thereby reaching the conductive film, to thus generate an electromotive force. In addition, since the photovoltaic film material includes the lithium particles, the presence of the lithium particles enables to maintain the electromotive force even under a light-shielded condition. According to the photovoltaic film material of the first aspect, since inorganic material particles are adopted, an inexpensive material, such as red iron oxide, can be employed, thereby enabling manufacture of a photovoltaic film at low cost. In addition, since an organic substance is not employed in the photovoltaic film material, problems arising from employment of a sensitizing dye constituted of an organic substance (e.g., problems with regard to a useful life and light resistance of the sensitizing dye, and a problem of discoloration of a sensitizing dye caused by moisture) will be prevented. Furthermore, since the only requirements are to form the photovoltaic film material of the invention into paste and to coat the same on a conductive film, a baking step can be omitted from formation of a photovoltaic film, thereby enabling reduction of manufacturing cost also in this regard.

Meanwhile, the first aspect of the invention may alternatively be defined as providing "a photovoltaic film material, for use in a photovoltaic film to be disposed on a solar cell, characterized by having photocatalyst-coated particles including: inorganic material particles which are particles of an inorganic material; and photocatalyst particles coated on the surface of the inorganic material particles."

A second aspect is characterized in that, in the first aspect, the photocatalyst-coated particles are obtained by means of producing a mixture in which an aqueous solution obtained by means of mixing titanium hydroxide gel and aqueous hydrogen peroxide, powder consisting of the inorganic material particles, and water are mixed (alternatively, may have been mixed in advance); leaving to stand a second mixture obtained by means of mixing the mixture, and lithium chloride or a lithium chloride aqueous solution, thereby forming a product material in which titanium hydroxide is coated on at least the surface of the inorganic material particles; and thereafter baking the product material. The baking temperature in this case is preferably set to 200°C or higher.

A third aspect is characterized in that, in the first or second aspect, the inorganic material which constitutes the inorganic material particles is an inorganic pigment or a metal oxide. Meanwhile, the third aspect may alternatively be defined as "being characterized in that, in the first or second aspect, the inorganic material particles are inorganic pigment particles (may alternatively be referred to as inorganic dye particles) or metal oxide particles." Alternatively, the third aspect may be defined as "being characterized in that the inorganic material particles in the first or second aspect are particles of a metal oxide, such as red iron oxide, yellow iron oxide, or black iron oxide."

A fourth aspect is characterized in that, in any one of the first to third aspects, the photocatalyst particles are titanium dioxide particles.

A fifth aspect is characterized in that, in any one of the first to fourth aspects, the photovoltaic film material further includes a binder, and in that the photovoltaic film material is formed into a coating fluid. By virtue thereof, by means of merely coating the photovoltaic film material on a conductive film, the photovoltaic film can be formed on a solar cell.

A sixth aspect is characterized in that, in any one of the first to fifth aspects, the binder is any one of: an aqueous solution obtained by means of mixing titanium hydroxide gel and aqueous hydrogen peroxide; a mixture of an aqueous solution obtained by means of mixing titanium hydroxide gel and aqueous hydrogen peroxide, and a lithium silicate aqueous solution; and lithium silicate.

Meanwhile, the sixth aspect may alternatively be defined as "being characterized in that, in any one of the first to fifth aspects, the binder is an aqueous solution obtained by means of mixing titanium hydroxide gel and aqueous hydrogen peroxide; or a mixture of an aqueous solution obtained by means of mixing titanium hydroxide gel and aqueous hydrogen peroxide, and a lithium silicate aqueous solution; or lithium silicate."

A seventh aspect provides a solar cell including a photovoltaic film, characterized in that the photovoltaic film has photocatalyst-coated particles including: inorganic material particles which are particles of an inorganic material; photocatalyst particles which are coated on the surface of the inorganic material particles; and lithium particles attached onto the inorganic material particles and/or the photocatalyst particles.

In a solar cell of the seventh aspect, in the photovoltaic film, the inorganic material particles function as a sensitizing dye. Energy excited in the inorganic material particles is transmitted to the photocatalyst particles in the form of electrons; and the electrons are sequentially transmitted from one photocatalyst particle to another, thereby reaching a conductive film (e.g., a conductive film disposed on a conductive glass plate) with which the photovoltaic film is in contact, to thus generate an electromotive force. In addition, since the photovoltaic film material includes the lithium particles, the presence of the lithium particles enables maintenance of the electromotive force even under a light-shielded condition. According to the solar cell of the seventh aspect, since inorganic material particles are employed in the photovoltaic film, an inexpensive material, such as selenium red, can be employed, thereby enabling manufacture of a photovoltaic film at low cost. In addition, since an organic substance is not employed in the photovoltaic film, problems arising from employment of a sensitizing dye constituted of an organic substance (e.g., problems with regard to a useful life and light resistance of the sensitizing dye, and a problem of discoloration of a sensitizing dye caused by moisture) will be prevented.

Meanwhile, the seventh aspect may alternatively be defined as providing "a solar cell including a photovoltaic film, characterized in that the photovoltaic film has photocatalyst-coated particles including: inorganic material particles which are photocatalyst-coated particles and which are particles of an inorganic material; and photocatalyst particles coated on the surface of the inorganic material particles."

An eighth aspect is characterized in that, in the seventh aspect, the photocatalyst-coated particles are obtained by means of producing a mixture in which an aqueous solution obtained by means of mixing titanium hydroxide gel and aqueous hydrogen peroxide, powder consisting of the inorganic material particles, and water are mixed (alternatively, may have been mixed in advance); leaving to stand a second mixture obtained by means of mixing the mixture, and lithium chloride or a lithium chloride aqueous solution, thereby forming a product material in which titanium hydroxide is coated on at least the surface of the inorganic material particles; and thereafter baking the product material. The baking temperature in this case is preferably set to 200°C or higher.

A ninth aspect is characterized in that, in the seventh or eighth aspect, the photovoltaic film further includes titanium dioxide which has been transformed from titanium hydroxide by means of baking a coating-fluid-like product material obtained by means of kneading the photocatalyst-coated particles in an aqueous solution having been obtained by means of mixing titanium hydroxide gel and aqueous hydrogen peroxide. The baking temperature in this case is preferably set to 200°C or higher.

A tenth aspect is characterized in that, in any one of the seventh to ninth aspects, the inorganic material which constitutes the inorganic material particles is an inorganic pigment or a metal oxide. Meanwhile, the tenth aspect may alternatively be defined as "being characterized in that, in any one of the seventh to ninth aspects, the inorganic material particles are inorganic pigment particles or metal oxide particles."

An eleventh aspect is characterized in that, in any one of the seventh to tenth aspects, the photovoltaic film further includes a binder.

A twelfth aspect is characterized in that, in the eleventh aspect, the binder is any one of: an aqueous solution obtained by means of mixing titanium hydroxide gel and aqueous hydrogen peroxide; a mixture of an aqueous solution obtained by means of mixing titanium hydroxide gel and aqueous hydrogen peroxide, and a lithium silicate aqueous solution; and lithium silicate.

Meanwhile, the twelfth aspect may alternatively be defined as "being characterized in that, in the eleventh aspect, the binder is an aqueous solution obtained by means of mixing titanium hydroxide gel and aqueous hydrogen peroxide; or a mixture of an aqueous solution obtained by means of mixing titanium hydroxide gel and aqueous hydrogen peroxide, and a lithium silicate aqueous solution; or lithium silicate."

A thirteenth aspect provides a method for manufacturing a photovoltaic film material for use in a photovoltaic film to be disposed in a solar cell, characterized by including a first-mixture preparation step of producing a first mixture in which an aqueous solution obtained by means of mixing titanium hydroxide gel and aqueous hydrogen peroxide, powder consisting of inorganic material particles―which are particles of an inorganic material―and water are mixed (alternatively, may have been mixed in advance); a second-mixture production step of producing a second mixture by means of mixing lithium chloride or a lithium chloride aqueous solution into the mixture produced in the first-mixture preparation step; a production-material formation step of leaving to stand the second mixture produced in the second-mixture preparation step, thereby forming a product material in which titanium hydroxide is coated on at least the surface of the inorganic material particles; and a baking step of baking the product material formed in the product-material formation step, thereby producing a photovoltaic film material.

A photovoltaic film material manufactured in accordance with the manufacturing method of the thirteenth aspect comprises inorganic material particles which are particles of an inorganic material; titanium dioxide particles which serve as photocatalyst particles coated on the surface of the inorganic material particles; and lithium particles attached onto the inorganic material particles and/or the titanium dioxide particles. By making use of a binder, the photovoltaic film material produces a coating-fluid-like photovoltaic film material; and the coating-fluid-like photovoltaic film material is coated on a conductive film (e. g. , a conductive film disposed on a conductive glass plate), thereby forming a photovoltaic film. Meanwhile, the photovoltaic film material coated on the conductive film may be baked. While in a state of a photovoltaic film, the inorganic material particles function as a sensitizing dye. Energy excited in the inorganic material particles is transmitted to the photocatalyst particles in the form of electrons. The electrons are sequentially transmitted from one photocatalyst particle to another, thereby reaching the conductive film, to thus generate an electromotive force. In addition, since the photovoltaic film material includes the lithium particles, the presence of the lithium particles enables maintenance of the electromotive force even under a light-shielded condition. According to manufacturing method of the invention, since inorganic material particles are adopted, an inexpensive material, such as selenium red, can be employed, thereby enabling manufacture of a photovoltaic film at low cost. In addition, since an organic substance is not employed in the photovoltaic film material, problems arising from employment of a sensitizing dye constituted of an organic substance (e.g., problems with regard to a useful life and light resistance of the sensitizing dye, and a problem of discoloration of a sensitizing dye caused by moisture) will be prevented. Furthermore, since the only requirements are to form the photovoltaic film material manufactured in accordance with the manufacturing method of the invention into coating fluid and to coat the same on a conductive film, the baking step can be omitted from formation of a photovoltaic film, thereby enabling reduction of manufacturing cost also in this regard. In addition, the amount of titanium dioxide particles coated on the surface of the inorganic material particles can be adjusted by means of adjusting the concentration of the titanium hydroxide sol in the aqueous solution during the mixture preparation step. The baking temperature in the baking step is preferably set to 200°C or higher.

Meanwhile, the thirteenth aspect may alternatively be defined as providing "a method for manufacturing a photovoltaic film material for use in a photovoltaic film to be disposed in a solar cell, characterized by including a first-mixture preparation step of producing a first mixture in which an aqueous solution obtained by means of mixing titanium hydroxide gel and aqueous hydrogen peroxide, powder consisting of inorganic material particles―which are particles of an inorganic material―and water are mixed (alternatively, may have been mixed in advance); a second-mixture production step of producing a second mixture by means of mixing lithium chloride or a lithium chloride aqueous solution into the mixture produced in the first-mixture preparation step; a production-material formation step of leaving to stand the second mixture produced in the second-mixture preparation step, thereby forming a product material in which titanium hydroxide is coated on at least the surface of the inorganic material particles; a drying step of drying the product material formed in the product-material formation step; and a baking step of baking the product material dried in the drying step, thereby producing a photovoltaic film material."

Alternatively, the thirteenth aspect may be defined as providing "a method for manufacturing a photovoltaic film material for use in a photovoltaic film to be disposed in a solar cell, characterized by including a mixture preparation step of producing a first mixture in which an aqueous solution obtained by means of mixing titanium hydroxide gel and aqueous hydrogen peroxide, powder consisting of inorganic material particles―which are particles of an inorganic material―and water are mixed (alternatively, may have been mixed in advance) ; a production-material formation step of leaving to stand the mixture produced in the mixture preparation step, thereby forming a product material in which titanium hydroxide is coated on the surface of the inorganic material particles; and a baking step of baking the product material formed in the product-material formation step, thereby producing a photovoltaic film material."

Alternatively, the thirteenth aspect may be defined as providing "a method for manufacturing a photovoltaic film material for use in a photovoltaic film to be disposed in a solar cell, characterized by including a mixture preparation step of producing a first mixture in which an aqueous solution obtained by means of mixing titanium hydroxide gel and aqueous hydrogen peroxide, powder consisting of inorganic material particles―which are particles of an inorganic material―and water are mixed (alternatively, may have been mixed in advance) ; a production-material formation step of leaving to stand a mixture produced in the mixture preparation step, thereby forming a product material in which titanium hydroxide is coated on the surface of the inorganic material particles; a drying step of drying the product material produced in the product-material formation step; and a baking step of baking the product material dried in the drying step, thereby producing photovoltaic film material."

Also in the modifications of the thirteenth aspect, the baking temperature in the baking step is preferably set to 200°C or higher.

A fourteenth aspect provides a method for manufacturing a photovoltaic film material for use in a photovoltaic film to be disposed in a solar cell, characterized by including: a production-material formation step of producing a precipitated product material by means of producing an aqueous solution having titanium hydroxide, powder consisting of inorganic material particles―which are particles of an inorganic material―, and lithium chloride, and leaving the thus-produced aqueous solution; and a baking step of baking the product material formed in the product-material formation step, thereby producing a photovoltaic film material.

A photovoltaic film material manufactured in accordance with the manufacturing method of the fourteenth aspect comprises inorganic material particles which are particles of an inorganic material;titanium dioxide particleswhichserve asphotocatalyst particles coated on the surface of the inorganic material particles; and lithium particles attached onto the inorganic material particles and/or the titanium dioxide particles. By making use of a binder, the photovoltaic film material produces a coating-fluid-like photovoltaic film material; and the coating-fluid-like photovoltaic film material is coated on a conductive film (e. g., a conductive film disposed on a conductive glass plate), thereby forming a photovoltaic film. Meanwhile, the photovoltaic film material coated on the conductive film may be baked. While in a state of a photovoltaic film, the inorganic material particles function as a sensitizing dye. Energy excited in the inorganic material particles is transmitted to the photocatalyst particles in the form of electrons. The electrons are sequentially transmitted from one photocatalyst particle to another, thereby reaching the conductive film, to thus generate an electromotive force. In addition, since the photovoltaic film material includes the lithium particles, the presence of the lithium particles enables maintenance of the electromotive force even under a light-shielded condition. According to manufacturing method of the invention, since inorganic material particles are adopted, an inexpensive material, such as selenium red, can be employed, thereby enabling manufacture of a photovoltaic film at low cost. In addition, since an organic substance is not employed in the photovoltaic film material, problems arising from employment of a sensitizing dye constituted of an organic substance (e.g., problems with regard to a useful life and light resistance of the sensitizing dye, and a problem of discoloration of a sensitizing dye caused by moisture) will be prevented. Furthermore, since the only requirements are to form the photovoltaic film material manufactured in accordance with the manufacturing method of the invention into coating fluid and to coat the same on a conductive film, the baking step can be omitted from formation of a photovoltaic film, thereby enabling reduction of manufacturing cost also in this regard. In addition, the amount of titanium dioxide particles coated on the surface of the inorganic material particles can be adjusted by means of adjusting the concentration of the titanium hydroxide sol in the aqueous solution during the mixture preparation step. The baking temperature in the baking step is preferably set to 200°C or higher.

Alternatively, the fourteenth aspect may be defined as providing "a method for manufacturing a photovoltaic film material for use in a photovoltaic film to be disposed in a solar cell, characterized by including: a production-material formation step of producing a precipitated product material by means of producing an aqueous solution having titanium hydroxide, powder consisting of inorganic material particles―which are particles of an inorganic material―, and lithium chloride, and leaving the thus-produced aqueous solution; a drying step of drying the product material formed in the product-material formation step; and a baking step of baking the product material dried in the drying step, thereby producing a photovoltaic film material."

Alternatively, the fourteenth aspect may be defined as providing "a method for manufacturing a photovoltaic film material for use in a photovoltaic film to be disposed in a solar cell, characterized by including: a production-material formation step of producing a precipitated product material by means of preparing titanium hydroxide, and powder consisting of inorganic material particles―which are particles of an inorganic material―and an aqueous solution, and leaving to stand the thus-produced aqueous solution; and a baking step of baking the product material produced in the production-material formation step, thereby producing a photovoltaic film material."

Alternatively, the fourteenth aspect may be defined as providing "a method for manufacturing a photovoltaic film material for use in a photovoltaic film to be disposed in a solar cell, characterized by including: a production-material formation step of producing a precipitated product material by means of preparing titanium hydroxide, powder consisting of and inorganic material particles―which are particles of an inorganic material―and an aqueous solution, and leaving to stand the thus-produced aqueous solution; a drying step of drying the productmaterial produced in the product-material formation step; and a baking step of baking the product material dried in the drying step, thereby producing a photovoltaic film material."

A fifteenth aspect is characterized in that, in the thirteenth or fourteenth aspect, the inorganic material which constitutes the inorganic material particles is an inorganic pigment, a metal, or a metal oxide. Meanwhile, the fifteenth aspect may alternatively be defined as "being characterized in that, in the thirteenth or fourteenth aspect, the inorganic material particles are inorganic pigment particles, metal particles, or metal oxide particles." Alternatively, the fifteenth aspect may be defined as "being characterized in that the inorganic material particles of the thirteenth or fourteenth aspect are particles of a metal oxide, such as red iron oxide, yellow iron oxide, or black iron oxide, or metal particles."

A sixteenth aspect is characterized in that, in the thirteenth, fourteenth, or fifteenth aspect, the method for manufacturing a photovoltaic film material further includes a coating-fluid-like-material production step of producing a coating-fluid-like photovoltaic film material by means of mixing the photovoltaic film material into an aqueous solution obtained by means of mixing titanium hydroxide gel and aqueous hydrogen peroxide.

A seventeenth aspect is characterized in that, in the thirteenth, fourteenth, or fifteenth aspect, the method for manufacturing a photovoltaic film material further includes a coating-fluid-like-material production step of producing a coating-fluid-like photovoltaic film material by means of mixing the produced photovoltaic film material into a lithium silicate aqueous solution.

An eighteenth aspect is characterized in that, in the thirteenth, fourteenth, or fifteenth aspect, the method for manufacturing a photovoltaic film material further includes a coating-fluid-like-material production step of producing a coating-fluid-like photovoltaic film material by means of mixing the photovoltaic film material into a mixture solution in which an aqueous solution―obtained by means of mixing titanium hydroxide gel and aqueous hydrogen peroxide―and lithium silicate are mixed.

A nineteenth aspect provides a method for manufacturing a photovoltaic film to be disposed on a solar cell, characterized by including a coating step of coating a photovoltaic filmmaterial manufactured in accordance with the method for manufacturing a photovoltaic filmmaterial defined in the fifteenth, sixteenth, seventeenth, or eighteenth aspect onto a conductive film serving as an electrode; and a baking step of baking the photovoltaic film material having been coated in the coating step. The baking temperature in the baking step is preferably set to 200°C or higher.

A twentieth aspect provides a method for manufacturing a photovoltaic film to be disposed on a solar cell, characterized by including a coating step of coating a photovoltaic filmmaterial manufactured in accordance with the method for manufacturing a photovoltaic filmmaterial defined in the fifteenth, sixteenth, seventeenth, or eighteenth aspect onto a conductive film serving as an electrode.

Meanwhile, still another aspect may be defined as providing "a method for manufacturing a solar cell, characterized by including a coating step of coating a photovoltaic film material manufactured in accordance with the method for manufacturing a photovoltaic filmmaterial defined in the fifteenth, sixteenth, seventeenth, or eighteenth aspect onto a conductive film serving as an electrode; and a baking step of baking the photovoltaic film material coated in the coating step." Alternatively, the same may be defined as providing "a method for manufacturing a solar cell, characterized by including a coating step of coating a photovoltaic film material manufactured in accordance with the method for manufacturing a photovoltaic filmmaterial defined in the fifteenth, sixteenth, seventeenth, or eighteenth aspect onto a conductive film serving as an electrode."

Meanwhile, in the above respective aspects, the term "coating-fluid-like" may also be replaced with "paste-like."

### Brief Description of the Drawings

Fig. 1 is an explanatory view showing an essential portion of a dye-sensitized solar cell.

### Best Mode for Implementing the Invention

Embodiments serving as working modes of the invention will be described by reference to the drawing.

First, a first embodiment will be described. A photovoltaic film (may be referred to as a "solar cell film") of a solar cell (more specifically, a dye-sensitized solar cell) in the first embodiment is a red coating whose main ingredients are photocatalyst-coated particles which are selenium red particles (mean particle size: about 0.5 µm) on the surface of which titanium dioxide particles (mean particle size: about 6 nm) are absorbed and disposed. Furthermore, the photocatalyst-coated particles are formed such that lithium particles are attached to the surface of the selenium red particles and to the surface of the titanium dioxide particles. A coating formed by means of applying the photocatalyst-coated particles on a conductive glass plate with use of titanium hydroxide (amorphous sol) as a binder is used as a photovoltaic film. The selenium red particles correspond to inorganic material particles; and the titanium dioxide particles correspond to photocatalyst particles.

In other words, the photovoltaic film is formed by means of coating a photovoltaic film material (may be referred to as a "coating material"), which will be described later, on a conductive glass plate and drying the same; or by means of coating the photovoltaic film material on a conductive glass plate, drying, and thereafter baking the same. Meanwhile, in the case where such baking operation is performed, titanium hydroxide serving as a binder is changed to titanium dioxide through baking; accordingly, in a stage of a photovoltaic film, the photovoltaic film can be said to be formed from the photocatalyst-coated particles and titanium dioxide particles. In addition, in a case where the photovoltaic film material is merely coated onto the conductive glass plate and dried without performing baking operation, the photovoltaic film is configured so as to have the photocatalyst-coated particles and titanium hydroxide (amorphous sol).

Here, descriptions about the photovoltaic film material will be provided. The photovoltaic film material is a product of suspension and kneading of the photocatalyst-coated particles in a mixture of ethanol and a light-yellow aqueous solution (hereinbelow, simply called a "light-yellow aqueous solution") (specific gravity: about 1.3, solid content: 2%) synthesized by means of adding aqueous hydrogen peroxide into titanium hydroxide (Ti(OH)₄) gel; and is formed into paste.

Meanwhile, the photocatalyst-coated particles are selenium red particles (mean particle size: about 0.5 µm) (inorganic material particles) on the surface of which titanium dioxide particles (mean particle size: about 6 nm) are absorbed and disposed. Lithium particles are attached onto the surface of the selenium red particles and onto the surface of the titanium dioxide particles. In other words, the titanium dioxide particles―to the surface of which the lithium particles are attached―and the lithium particles are attached to the surface of the selenium red particles. Meanwhile, with regard to an extent of attachment of the lithium particles to the titanium dioxide particles, there are cases where lithium particles on individual titanium dioxide particles coat the surface of a titanium dioxide particle, and there are other cases where lithium particles partially cover the surface of a titanium dioxide particle. In short, the extent of attachment of the lithium particles onto the titanium dioxide particles varies among the individual titanium dioxide particles in a photovoltaic film material.

In the above, the titanium dioxide particles are caused to be absorbed and disposed on the surface of the selenium red particles; however, particles of another metal oxide, such as red iron oxide particles, yellow iron oxide particles, or black iron oxide particles, or further alternatively metal particles, may be employed in place of the selenium red particles. More specifically, an essential requirement for the particles on which the titanium dioxide particles are absorbed and disposed is to be inorganic material particles, such as inorganic pigment particles (may be referred to as inorganic dye particles); that is, to be inorganic material particles―which are particles of an inorganic material. Meanwhile, in the invention, an inorganic material encompasses inorganic pigments, metal oxides, and metals; and inorganic material particles encompasses all inorganic pigment particles, metal oxide particles, and metal particles (this also applies to other embodiments). In addition, in a photovoltaic film or a photovoltaic film material, particles of an inorganic material, such as selenium red, are in a state of being oxidized through a baking step, which will be described later; that is, in a state of particles of an oxidized inorganic material, such as a metal oxide.

A method for manufacturing the photovoltaic film in the first embodiment will be described. First, 6 g of powder of selenium red (mean particle size: about 0. 5 µm, specific gravity: about 1.8) is uniformly dispersed in 600 mL (milliliter, the same applies hereinafter) of water by means of ultrasonication, thereby preparing a predetermined amount of a selenium-red dispersion. Meanwhile, 50.2 g of a light-yellow aqueous solution (specific gravity: about 1.3, solid content: 2%) synthesized by means of addition of aqueous hydrogen peroxide into titanium hydroxide (Ti(OH)₄) gel is uniformly dispersed in 600 mL of water. In this case, the titanium hydroxide gel is obtained by means of causing ammonia to react with titanium tetrachloride. When aqueous hydrogen peroxide is added to the titanium hydroxide gel, bubbling occurs; however, this bubbling stops before long, thereby obtaining a viscous aqueous solution. The solution is diluted, thereby obtaining the above-mentioned light-yellow aqueous solution. Meanwhile, when aqueous hydrogen peroxide is added, titanium hydroxide gel is transformed into titanium hydroxide sol.

Next, the two solutions; that is, the selenium-red dispersion and the light-yellow aqueous solutions, are mixed, thereby producing 1.2 L of a mixture (a first mixture) (a first-mixture preparation step). The mixture can be said to be a mixture in which an aqueous solution―obtained by means of mixing titanium hydroxide gel and aqueous hydrogen peroxide―, powder―consisting of inorganic material particles which are of an inorganic material―, and water are mixed (the same also applies to any counterpart in the following embodiments). After the mixture is stirred for one hour (stirring time is not limited to one hour, and may be set within a range of, e. g. , thirty minutes to two hours) by an agitator (e.g., a stirrer), 10.7 g of 40% lithium chloride aqueous solution is added, thereby preparing a second mixture (a second-mixture preparation step). The second mixture can be said to be an aqueous solution having titanium hydroxide; powder of inorganic material particles, which are particles of an inorganic material; and lithium chloride (the same also applies to any counterpart in the following embodiments). The second mixture is slightly stirred, and caused to be settled (alternatively, may be left to stand) for two hours, thereby causing precipitation of particles (a product-material formation step (the precipitate corresponds to a product material). Meanwhile, the time of settlement is not limited to two hours, and may be set within a range of, e.g., thirty minutes to three hours. The above condition can be readily ascertained from observation that a supernatant having been light-yellow-colored at the time of addition of the light-yellow aqueous solution turns transparent after settlement. When the surface of the selenium red is ascertained to be coated with the titanium hydroxide, the supernatant portion is discarded by means of decantation; and the product material; that is, the precipitate, is heated at 100°C for 10 hours (in the above description, the temperature is set to 100°C; however, no limitation is imposed thereon, and the temperature may be set within the range of 50°C to 150°C; and the time of heating is set to 10 hours; however, no limitation is imposed thereon (time of heating may be set within the range of 5 hours to 20 hours)), to thus be dried. Thereafter, the product material is baked in an inert atmosphere (e.g., in Ar gas flow (alternatively, in an Ar atmosphere), or in He gas flow (alternatively, in an He atmosphere), or in N₂ gas flow (alternatively, in an N₂ atmosphere) at 500°C for one hour (the baking step), thereby obtaining about 6 g of red photocatalyst-coated particles. By virtue of having such a configuration that titanium dioxide particles are absorbed and coated on the surface of the selenium red particles, the red photocatalyst-coated particles can react not only in the ultraviolet light wavelength range but also in the visible light wavelength range, thereby being wide-band-range-reaction-type photocatalyst particles.

Meanwhile, in preparation of the red photocatalyst-coated particles, baking operation is performed at 500°C; however, an essential requirement for the baking temperature is to be 200°C or higher. The same is more preferably set within the range of 200 to 700°C. In addition, in the above, the baking time is set to one hour; however, the baking time may be set within a range of thirty minutes to three hours.

Worthy of special note is that, 4.28 g of lithium chloride in the form of solid content is added at the time of causing precipitation of the particles; however, when the same is not added, the supernatant remains light-yellow, and coating will be insufficient. The volume of the precipitate in the case of lithium chloride being added is ten times or more that in a case where the same not being added. This seems to be ascribable to electrical properties of lithium ions and capabilities of chloride ions. In addition, when, for the purpose of comparison, precipitation is caused for comparison by means of adding sodium chloride or potassium chloride, on some occasions white salt crystals appear during baking; however, such appearance does not occur in the case of lithium chloride. Meanwhile, since baking operation is performed as described above, chlorine ions in lithium chloride evaporate. In contrast, lithium ions in lithium chloride remain in photocatalyst-coated particles in the form of lithium particles. Meanwhile, in the above description, a lithium chloride aqueous solution is added; however, alternatively, lithium chloride itself may be added in place of the aqueous solution (the same also applies to any counterpart in the following embodiments).

Next, 5 g of the photocatalyst-coated particles obtained in the above production method is suspended and kneaded in a mixture consisting of 45 mL of light-yellow aqueous solution (specific gravity: about 1.3, solid content: 2%) synthesized by means of adding aqueous hydrogen peroxide to titanium hydroxide (Ti(OH)₄) gel, and 5 mL of ethanol, thereby preparing paste for producing a photovoltaic film (a coating-fluid-like material preparation step). Meanwhile, when aqueous hydrogen peroxide is added, titanium hydroxide gel is transformed into titanium hydroxidesol. The paste serves as the photovoltaic film material. The paste is coated on a conductive glass plate (ITO) (that is, the conductive film on a conductive glass plate on which a conductive film serving as an electrode is disposed) with use of a spray gun, and dried, thereby preparing a photovoltaic film. The coating operation of the paste onto the conductive glass corresponds to a coating step.

Meanwhile, the paste may be merely coated on a conductive glass plate and dried; alternatively, the paste may be baked after being coated on a conductive glass plate and dried. This baking operation corresponds to the baking step. Conditions for performing such baking are 480 Celsius, in an inert atmosphere, and for one hour. In the case where such baking operation is performed, titanium hydroxide serving as a binder are changed to titanium dioxide through baking; accordingly, in a stage of being formed into a photovoltaic film, the photovoltaic film can be said to be formed from the photocatalyst-coated particles and titanium dioxide particles. Meanwhile, in the above description, the baking operation is performed at 480°C for one hour; however, no limitation is imposed thereon, and an essential requirement for the baking temperature is to be, e.g., 200°C or higher, and more preferably the baking temperature falls within the range of 200°C to 700°C. In addition, an essential requirement for the baking time is to fall, e. g. , within the range of thirty minutes to three hours.

Incidentally,inthe above manufacturing method,the amount of titanium dioxide particles coated on the surface of selenium red particles can be adjusted by means of adjusting the concentration of the titanium hydroxide sol in the light-yellow aqueous solution. For instance, the amount of the titanium dioxide particles can be increased by means of increasing the concentration of the titanium hydroxide sol. More specifically, by means of adjusting the amount of titanium hydroxide gel to react with aqueous hydrogen peroxide, and/or the volume of water serving as a solvent for performing dilution, the concentration of the titanium hydroxide sol can be adjusted, thereby enabling adjustment of the amount of the titanium dioxide particles coated on the surface of the selenium red particles, which serve as inorganic material particles. In addition, the amount of titanium dioxide particles coated on the surface of selenium red particles can also be adjusted by means of adjusting the concentration of the selenium red in a dispersion solution in which powder of the inorganic material particles (more specifically, powder of selenium red) is dispersed. For instance, the amount of titanium dioxide particles coated on the surface of a single selenium red particle can be reduced by means of increasing the concentration of a pigment.

In addition, also in the case where the light-yellow aqueous solution synthesized by means of adding aqueous hydrogen peroxide into titanium hydroxide (Ti(OH)₄) gel is used as a binder, coating strength of the photovoltaic film can be adjusted by means of adjusting the concentration of titanium hydroxide sol in the light-yellow aqueous solution.

In addition, the amount of titanium dioxide in the photovoltaic film can be adjusted also by means of adjusting the amount of the photocatalyst-coated particles in relation to the mixture when the photocatalyst-coated particles are suspended and kneaded into the mixture constituted of the light-yellow aqueous solution (specific gravity: about 1.3, solid content: 2%) having been synthesized by means of adding aqueous hydrogen peroxide to titanium hydroxide (Ti(OH)₄) gel, and ethanol.

Meanwhile, in the above manufacturing method, selenium red is adopted as an inorganic material; however, there may be adopted another metal oxide or another inorganic pigment, or a metal (that is, a metal material may be adopted).

Meanwhile, a solar cell employing the photovoltaic film of the present embodiment has the same basic configuration as that in the related art, and is configured, e.g., as shown in Fig. 1. More specifically, on a solar cell A of the present embodiment, a photovoltaic film (may alternatively be referred to as a coating) 30 of the above configuration is disposed. In relation to working effects of the photovoltaic film of the present embodiment, selenium red particles in the photocatalyst-coated particles function as a sensitizing dye. When light impinges on the selenium red particles (it should be noted that selenium red particles are covered with titanium dioxide particles, and that the photocatalyst-coated particles are present among the binder, or, in a case where baking operation is performed, present in the titanium dioxide; however, in actuality, since gaps are present among particles of the titanium dioxide (in a case where baking operation is not performed, in titanium hydroxide) particles, light reaches the selenium red particles), the selenium red is excited in terms of energy, and the thus-generated excitation energy is transmitted in the form of electrons to the titanium dioxide particles which coat the selenium red. The electrons are sequentially transmitted from one titanium dioxide particle to another, thereby reaching a conductive glass plate 10, to thus be transferred to a conductive glass plate 20 on the counter electrode. The mechanism allows delivery of electric power at this time. The electrons having been transferred to the counter electrode subsequently return to the sensitizing dye or to the titanium dioxide particles by way of a redox reaction in the electrolytic solution. It can be said that an electromotive force is obtained through repetition of this cycle.

Next, functionality of a solar cell employing the photovoltaic film of the first embodiment will be described briefly. Generation of an electromotive force is ascertained under irradiation with artificial sunlight by use of a platinum conductive glass as a counter electrode of an electrode on which the photovoltaic film is coated, and with use of 0. 5M LiI, 0. 05M I₂, 0.4M 4-tertialy-butylpyridine,0.5MDMPII,3-metoxy acetonitril (solvent) as an electrolyte. As a result, a constant electromotive force is obtained irrespective of whether or not the photovoltaic film is subjected to baking operation; and a correlation diagram between electric current and voltage indicates characteristics of a battery.

In addition, the solar cell of the present embodiment generates an electromotive force for a certain duration even after being placed in a light-shielded condition. This seems to be ascribable to capabilities of lithium particles in the photovoltaic film.

As described above, since the photovoltaic film and the photovoltaic film material of the solar cell in the present embodiment are manufactured in accordance with the above-described manufacturing process, and can employ an inexpensive material, such as selenium red, a photovoltaic film can be manufactured at low cost. In addition, since an organic substance is not employed in the photovoltaic film and the photovoltaic film material, problems arising from employment of a sensitizing dye constituted of an organic substance (e.g., problems with regard to a useful life and light resistance of the sensitizing dye, and a problem of discoloration of a sensitizing dye caused by moisture) will be prevented. Furthermore, in the case where the photovoltaic film material of the present embodiment is employed, a consistent result can be obtained from formation of a photovoltaic film, irrespective of whether or not baking operation is performed; accordingly, a baking step can be omitted from formation of a photovoltaic film, thereby enabling reduction of manufacturing cost also in this regard.

In addition, in the present embodiment, since the aqueous solution of lithium chloride is employed in manufacture of the photovoltaic film material, absorption of titanium hydroxide into selenium red can be enhanced, thereby enabling sufficient coating of the titanium hydroxide onto the selenium red. In addition, since the photovoltaic film material includes the lithium particles, the presence of the lithium particles enables maintenance of an electromotive force even under a light-shielded condition.

Next, a second embodiment will be described. A photovoltaic film (may be referred to as a "solar cell film") of a solar cell (more specifically, a dye-sensitized solar cell) of the second embodiment is a red coating whose main ingredients are photocatalyst-coated particles which are selenium red particles (mean particle size: about 0.5 µm) on the surface of which titanium dioxide particles (mean particle size: about 6 nm) are absorbed and disposed. Furthermore, the photocatalyst-coated particles are formed such that lithium particles are attached to the surface of the selenium redparticles and to the surface of the titanium dioxide particles. A coating formed by means of applying the photocatalyst-coated particles on a conductive glass plate with use of lithium silicate as a binder is used as a photovoltaic film. More specifically, the photovoltaic film of the present embodiment includes the above-mentioned photocatalyst-coated particles and lithium silicate particles. The selenium red particles correspond to inorganic material particles; and the titanium dioxide particles correspond to photocatalyst particles.

The photovoltaic film is formed by means of coating a photovoltaic film material, which will be described later, on a conductive glass plate and drying the same; or by means of coating the photovoltaic film material on a conductive glass plate, drying, and thereafter baking the same.

Here, descriptions of the photovoltaic film material will be provided. The photovoltaic film material is a product of suspension and kneading of the photocatalyst-coated particles in a mixture of a lithium silicate and purified water; and is formed into paste.

Meanwhile, the photocatalyst-coated particles are selenium red particles (mean particle size: about 0.5 µm) (inorganic material particles) on the surface of which titanium dioxide particles (mean particle size: about 6 nm) are absorbed and disposed. Lithium particles are attached onto the surface of the selenium red particles and onto the surface of the titanium dioxide particles. In other words, the titanium dioxide particles―on the surface of which the lithium particles are attached―and the lithium particles are attached on the surface of the selenium red particles. Meanwhile, with regard to an extent of attachment of the lithium particles onto the titanium dioxide particles, there are cases where lithium particles on individual titanium dioxide particles coat the surfaces of a titanium dioxide particle, and there are other cases where lithium particles partially cover the surface of a titanium dioxide particle. That is, the extent of attachment of the lithium particles onto the titanium dioxide particles varies among the individual titanium dioxide particles in a photovoltaic film material.

In the above description, the titanium dioxide particles are caused to be absorbed and disposed on the surface of the selenium red particles; however, particles of another metal oxide, such as red iron oxide particles, yellow iron oxide particles, or black iron oxide particles, or further alternatively metal particles, may be employed in place of the selenium red particles. More specifically, an essential requirement for the particles on which the titanium dioxide particles are absorbed and disposed is to be inorganic material particles, such as inorganic pigment particles (may be referred to as inorganic dye particles); that is, to be inorganic material particles―which are particles of an inorganic material. Meanwhile, in a photovoltaic film or a photovoltaic film material, particles of an inorganic material, such as selenium red, are in a state of being oxidized through a baking step, which will be described later; that is, in a state of particles of an oxidized inorganic material, such as a metal oxide.

A method for manufacturing the photovoltaic film of the second embodiment will be described. First, photocatalyst-coated particles are prepared. The method for preparing the photocatalyst-coated particles is the same as that in the first embodiment. More specifically, first, 6 g of powder of selenium red (mean particle size: about 0.5 µm, specific gravity: about 1.8) is uniformly dispersed in 600 mL (milliliter, the same applies hereinafter) of water by means of ultrasonication, thereby preparing a predetermined amount of a selenium-red dispersion. Meanwhile, 50.2 g of a light-yellow aqueous solution (specific gravity: about 1.3, solid content: 2%) synthesized by means of addition of aqueous hydrogen peroxide into titanium hydroxide (Ti (OH)₄) gel is uniformly dispersed in 600 mL of water. In this case, the titanium hydroxide gel is obtained by means of causing ammonia to react with titanium tetrachloride. When aqueous hydrogen peroxide is added to the titanium hydroxide gel, bubbling occurs; however, this bubbling stops before long, thereby obtaining a viscous aqueous solution. The solution is diluted, thereby obtaining the above-mentioned light-yellow aqueous solution. Meanwhile, when aqueous hydrogen peroxide is added, titanium hydroxide gel is transformed into titanium hydroxide sol.

Next, the two solutions; that is, the selenium-red-dispersed solution and the light-yellow aqueous solution, are mixed, thereby producing 1.2 L of a mixture (a first mixture) (a first-mixture preparation step). After the mixture is stirred for one hour (stirring time is not limited to one hour, and may be set within a range of, e. g. , thirty minutes to two hours) by an agitator (e.g., a stirrer), 10.7 g of 40% lithium chloride aqueous solution is added, thereby preparing a secondmixture (a second-mixture preparation step). The second mixture is slightly stirred, and caused to be settled (alternatively, may be left to stand) for two hours, thereby causing precipitation of particles (a product-material formation step (the precipitate corresponds to a product material). The time of settlement is not limited to two hours, and may be set within a range of, e.g., thirty minutes to three hours). The above condition can be readily ascertained from observation that a supernatant having been light-yellow-colored at the time of addition of the light-yellow aqueous solution turns transparent after settlement. When the surface of the selenium red is ascertained to be coated with the titanium hydroxide, the supernatant portion is discarded by means of decantation; and the product material; that is, the precipitate, is heated at 100°C for 10 hours (in the above description, the temperature is set to 100°C; however, no limitation is imposed thereon, and the temperature may be set within the range of 50°C to 150°C; and the time of heating is set to 10 hours; however, no limitation is imposed thereon (the time of heating may be set within the range of 5 hours to 20 hours)), to thus be dried. Thereafter, the product material is baked in an inert atmosphere (in Ar gas flow (alternatively, in an Ar atmosphere), or in He gas flow (alternatively, in an He atmosphere), or in N₂ gas flow (alternatively, in an N₂ atmosphere)) at 500°C for one hour (the baking step), thereby obtaining about 6 g of red photocatalyst-coated particles. By virtue of having such a configuration that titanium dioxide particles are absorbed and coated on the surface of the selenium red particles, the red photocatalyst-coated particles can react not only in the ultraviolet light wavelength range, but also in the visible light wavelength range, thereby being wide-band-range-reaction-type photocatalyst particles.

Meanwhile, in preparation of the red photocatalyst-coated particles, baking operation is performed at 500°C; however, an essential requirement for the baking temperature is to be 200°C or higher. The same is more preferably set within the range of 200°C to 700°C. In addition, in the above, the baking time is set to one hour; however, the baking time may be set within a range of thirty minutes to three hours.

Worthy of special note is that, 4.28 g of lithium chloride in the form of solid content is added at the time of causing precipitation of the particles; however, when the same is not added, the supernatant remains light-yellow, and coating will be insufficient. The volume of the precipitate in the case of lithium chloride being added is ten times or more that in a case where the same is not added. This seems to be ascribable to electrical properties of lithium ions and capabilities of chloride ions. In addition, when, for the purpose of comparison, precipitation is caused by means of adding sodium chloride or potassium chloride, on some occasions white salt crystals appear during baking; however, such appearance does not occur in the case of lithium chloride. Meanwhile, since baking operation is performed as described above, chlorine ions in lithium chloride evaporate. In contrast, lithium ions in lithium chloride remain in photocatalyst-coated particles in the form of lithium particles. Meanwhile, in the above description, a lithium chloride aqueous solution is added; however, alternatively, lithium chloride itself may be added in place of the aqueous solution.

Next, 5 g of photocatalyst-coated particles obtained in the above method is suspended and kneaded in a mixture consisting of 2.7 g of lithium silicate (SiO₂ content: 20 to 21%) and 48.3 g of purified water, thereby preparing a paste for producing a photovoltaic film. More specifically, a paste for producing a photovoltaic filmis prepared by means of suspending and kneading the photocatalyst-coated particles into a mixture consisting of lithium silicate and purified water (a coating-fluid-like material preparation step). The paste is coated on a conductive glass plate (ITO) (that is, the conductive film on a conductive glass plate on which a conductive film serving as an electrode is disposed) with use of a spray gun, and dried, thereby preparing a photovoltaic film. The coating operation of the paste onto the conductive glass corresponds to a coating step.

Meanwhile, the paste may be merely coated on a conductive glass plate and dried; alternatively, the paste may be baked after being coated on a conductive glass plate and dried. This baking operation corresponds to the baking step. Conditions for performing baking are 480 Celsius, in an inert atmosphere, and for one hour. Meanwhile, in the above description, the baking operation is performed at 480°C for one hour; however, no limitation is imposed thereon, and an essential requirement for the baking temperature is to be, e.g., 200°C or higher, and more preferably, the baking temperature falls within the range of 200°C to 700°C. In addition, an essential requirement for the baking time is to fall, e.g. , within the range of thirty minutes to three hours.

Also in the second embodiment, as in the case of the first embodiment, in the above manufacturing method, the amount of titanium dioxide particles coated on the surface of selenium red particles can be adjusted by means of adjusting the concentration of the titanium hydroxide sol in the light-yellow aqueous solution. In addition, the amount of titanium dioxide particles coated on the surface of selenium red particles can also be adjusted by means of adjusting the concentration of the selenium red in a dispersion solution in which powder of the inorganic material particles (more specifically, powder of selenium red) is dispersed.

In addition, the amount of titanium dioxide in the photovoltaic film can also be adjusted by means of adjusting the amount of the photocatalyst-coated particles in relation to the mixture when the photocatalyst-coated particles are suspended and kneaded in the mixture constituted of lithium silicate and purified water.

Meanwhile, in the above manufacturing method, selenium red is adopted as an inorganic material; however, there may be adopted another metal oxide or another inorganic pigment, or a metal (that is, a metal material may be adopted).

Meanwhile, a solar cell employing the photovoltaic film of the present embodiment has the same basic configuration as that in the related art, and is configured, e.g., as shown in Fig. 1. More specifically, on a solar cell A of the present embodiment, a photovoltaic film (may alternatively be referred to as a coating) 30 of the above configuration is disposed. The working effects of the photovoltaic film of the present embodiment are the same as those of the first embodiment. More specifically, selenium red particles in the photocatalyst-coated particles function as a sensitizing dye. When light impinges on the selenium red particles (it should be noted that the selenium red particles are covered with titanium dioxide particles, and that the photocatalyst-coated particles are present in the binder; however, in actuality, since gaps are present among particles of the titanium dioxide and those of the lithium silicate, light reaches the selenium red particles), the selenium red is excited in terms of energy, and the thus-generated excitation energy is transmitted in the form of electrons to the titanium dioxide particles which coat the selenium red particles. The electrons are sequentially transmitted from one titanium dioxide particle to another, thereby reaching a conductive glass plate 10, to thus be transferred to a conductive glass plate 20 on the counter electrode. The mechanism allows delivery of electric power at this time. The electrons having been transferred to the counter electrode subsequently return to the sensitizing dye or to the titanium dioxide particles by way of a redox reaction in the electrolytic solution. It can be said that an electromotive force is obtained through repetition of this cycle.

Next, functionality of a solar cell employing the photovoltaic film of the second embodiment will be briefly described. Generation of an electromotive force is ascertained under irradiation of artificial sunlight with use of a platinum conductive glass as a counter electrode of an electrode on which the photovoltaic film is coated, and with use of 0. 5M LiI, 0. 05M I₂,0.4M 4-tertialy-butylpyridine,0.5MDMPII,3-metoxy acetonitril (solvent) as an electrolyte. As a result, a constant electromotive force is obtained irrespective of whether or not the photovoltaic film is subjected to baking operation; and a correlation diagram between electric current and voltage indicates characteristics of a battery.

In addition, the solar cell of the present embodiment generates an electromotive force for a certain duration even after being placed in a light-shielded condition. This seems to be ascribable to capabilities of lithium particles in the photovoltaic film.

As described above, since the photovoltaic film and the photovoltaic film material of the solar cell in the present embodiment are manufactured in accordance with the above-described manufacturing process, and can employ an inexpensive material, such as selenium red, a photovoltaic film can be manufactured at low cost. In addition, since an organic substance is not employed in the photovoltaic film and the photovoltaic film material, problems arising from employment of a sensitizing dye constituted of an organic substance (e.g., problems with regard to a useful life and light resistance of the sensitizing dye, and a problem of discoloration of a sensitizing dye caused by moisture) will be prevented. Furthermore, in the case where the photovoltaic film material of the present embodiment is employed, a consistent result can be obtained from formation of a photovoltaic film, irrespective of whether or not baking operation is performed; accordingly, a baking step can be omitted from formation of a photovoltaic film, thereby enabling reduction of manufacturing cost also in this regard.

In addition, in the present embodiment, since the aqueous solution of lithium chloride is employed in manufacture of the photovoltaic film material, absorption of titanium hydroxide into selenium red can be enhanced, thereby enabling sufficient coating of the titanium hydroxide onto the selenium red. In addition, since the photovoltaic film material includes the lithium particles, the presence of the lithium particles enables maintenance of an electromotive force even under a light-shielded condition.

Next, a third embodiment will be described. A photovoltaic film (may be referred to as a "solar cell film") of a solar cell (more specifically, a dye-sensitized solar cell) of the third embodiment is a red coating whose main ingredients are photocatalyst-coated particles which are selenium red particles (mean particle size: about 0.5 µm) on the surface of which titanium dioxide particles (mean particle size: about 6 nm) are absorbed and disposed. Furthermore, the photocatalyst-coated particles are formed such that lithium particles are attached to the surface of the selenium red particles and to the surface of the titanium dioxide particles. A coating formed by means of applying the photocatalyst-coated particles on a conductive glass plate with use of titanium hydroxide (amorphous sol) and lithium silicate as a binder is used as a photovoltaic film. Meanwhile, the selenium red particles correspond to inorganic material particles; and the titanium dioxide particles correspond to photocatalyst particles.

More specifically, the photovoltaic film is formed by means of coating a photovoltaic film material, which will be described later, on a conductive glass plate and drying the same; or by means of coating the photovoltaic film material on a conductive glass plate, drying, and thereafter baking the same. Meanwhile, in the case where such baking operation is performed, titanium hydroxide serving as a binder is transformed to titanium dioxide through baking; accordingly, in a stage of formation of a photovoltaic film, the photovoltaic film can be said to be formed from the photocatalyst-coated particles, titanium dioxide particles, and lithium silicate. In addition, in a case where the photovoltaic film material is merely coated onto the conductive glass plate and dried without performing baking operation, the photovoltaic film is configured so as to have the photocatalyst-coated particles, titanium hydroxide (amorphous sol), and lithium silicate.

Here, descriptions about the photovoltaic film material will be provided. The photovoltaic film material is a product of suspension and kneading of the photocatalyst-coated particles in a mixture of lithium silicate and a light-yellow aqueous solution (hereinbelow, simply called a "light-yellow aqueous solution") (specific gravity: about 1.3, solid content: 2%) synthesized by means of adding aqueous hydrogen peroxide into titanium hydroxide (Ti(OH)₄) gel; and is formed into paste.

Meanwhile, the photocatalyst-coated particles are selenium red particles (mean particle size: about 0.5 µm) (inorganic material particles) on the surface of which titanium dioxide particles (mean particle size: about 6 nm) are absorbed and disposed. Lithium particles are attached onto the surface of the selenium red particles and onto the surface of the titanium dioxide particles. In other words, the titanium dioxide particles―on the surface of which the lithium particles are attached―and the lithium particles are attached on the surface of the selenium red particles. Meanwhile, with regard to an extent of attachment of the lithium particles onto the titanium dioxide particles, there are cases where lithium particles on individual titanium dioxide particles coat the surfaces of a titanium dioxide particle, and there are other cases where lithium particles partially cover the surface of titanium dioxide. That is, the extent of attachment of the lithium particles onto the titanium dioxide particles varies among the individual titanium dioxide particles in a photovoltaic film material.

In the above, the titanium dioxide particles are caused to be absorbed and disposed on the surface of the selenium red particles; however, particles of another metal oxide, such as red iron oxide particles, yellow iron oxide particles, or black iron oxide particles, or further alternatively metal particles, may be employed in place of the selenium red particles. More specifically, an essential requirement for the particles on which the titanium dioxide particles are absorbed and disposed is to be inorganic material particles, such as inorganic pigment particles (may be referred to as inorganic dye particles); that is, to be inorganic material particles―which are particles of an inorganic material. Meanwhile, in a photovoltaic film or a photovoltaic film material, particles of an inorganic material, such as selenium red, are in a state of being oxidized through a baking step, which will be described later; that is, in a state of particles of an oxidized inorganic material, such as a metal oxide.

A method for manufacturing the photovoltaic film of the third embodiment will be described. First, 6 g of powder of selenium red (mean particle size: about 0. 5 µm, specific gravity: about 1.8) is uniformly dispersed in 600 mL (milliliter, the same applies hereinafter) of water by means of ultrasonication, thereby preparing a predetermined amount of a selenium-red dispersion. Meanwhile, 50.2 g of a light-yellow aqueous solution (specific gravity: about 1.3, solid content: 2%) synthesized by means of addition of aqueous hydrogen peroxide into titanium hydroxide (Ti(OH)₄) gel is uniformly dispersed in 600 mL of water. In this case, the titanium hydroxide gel is obtained by means of causing ammonia to react with titanium tetrachloride. When aqueous hydrogen peroxide is added to the titanium hydroxide gel, bubbling occurs; however, this bubbling stops before long, thereby obtaining a viscous aqueous solution. The solution is diluted, thereby obtaining the above-mentioned light-yellow aqueous solution. Meanwhile, when aqueous hydrogen peroxide is added, titanium hydroxide gel is transformed into titanium hydroxide sol.

Next, the two solutions; that is, the selenium-red-dispersed solution and the light-yellow aqueous solution, are mixed, thereby producing 1.2 L of a mixture (a first mixture) (a first-mixture preparation step). After the mixture is stirred for one hour (stirring time is not limited to one hour, and may be set within a range of, e. g. , thirty minutes to two hours) by an agitator (e.g., a stirrer), 10.7 g of 40% lithium chloride aqueous solution is added, thereby preparing a secondmixture (a second-mixture preparation step). The second mixture is slightly stirred, and caused to be settled (alternatively, may be left to stand) for two hours, thereby causing precipitation of particles (a product-material formation step (the precipitate corresponds to a product material). The time of settlement is not limited to two hours, and may be set within a range of, e.g., thirty minutes to three hours). The above condition can be readily ascertained from observation that a supernatant having been light-yellow-colored at the time of addition of the light-yellow aqueous solution turns transparent after settlement. When the surface of the selenium red is ascertained to be coated with the titanium hydroxide, the supernatant portion is discarded by means of decantation; and the product material; that is, the precipitate, is heated at 100°C for 10 hours (in the above description, the temperature is set to 100°C; however, no limitation is imposed thereon, and the temperature may be set within the range of 50°C to 150°C; and the time of heating is set to 10 hours; however, no limitation is imposed thereon (the time of heating may be set within the range of 5 hours to 20 hours)), to thus be dried. Thereafter, the product material is baked in an inert atmosphere (in Ar gas flow (alternatively, in an Ar atmosphere), or in He gas flow (alternatively, in an He atmosphere), or in N₂ gas flow (alternatively, in an N₂ atmosphere) at 500°C for one hour (the baking step), thereby obtaining about 6 g of red photocatalyst-coated particles. By virtue of having such a configuration that titanium dioxide particles are absorbed and coated on the surface of the selenium red particles, the red photocatalyst-coated particles can react not only in the ultraviolet light wavelength range, but also in the visible light wavelength range, thereby being wide-band-range-reaction-type photocatalyst particles.

Meanwhile, in preparation of the red photocatalyst-coated particles, baking operation is performed at 500°C; however, an essential requirement for the baking temperature is to be 200°C or higher. The same is more preferably set within the range of 200°C to 700°C. In addition, in the above, the baking time is set to one hour; however, the baking time may be set within a range of thirty minutes to three hours.

Worthy of special note is that, 4.28 g of lithium chloride in the form of solid content is added at the time of causing precipitation of the particles; however, when the same is not added, the supernatant remains light-yellow, and coating will be insufficient. The volume of the precipitate in the case of lithium chloride being added is ten times or more that in a case where the same is not added. This seems to be ascribable to electrical properties of lithium ions and capabilities of chloride ions. In addition, when, for the purpose of comparison, precipitation is caused by means of adding sodium chloride or potassium chloride, on some occasions white salt crystals appear during baking; however, such appearance does not occur in the case of lithium chloride. Meanwhile, since baking operation is performed as described above, chlorine ions in lithium chloride evaporate. In contrast, lithium ions in lithium chloride remain in photocatalyst-coated particles in the form of lithium particles. Meanwhile, in the above description, a lithium chloride aqueous solution is added; however, alternatively, lithium chloride itself may be added in place of the aqueous solution.

Next, 5 g of photocatalyst-coated particles obtained in the above method is suspended and kneaded in a mixture consisting of 2.7 g of lithium silicate (SiO₂ content: 20 to 21%) and 50 g of a light-yellow aqueous solution (specific gravity: about 1.3, solid content: 2%) synthesized by means of adding aqueous hydrogen peroxide to titanium hydroxide (Ti(OH)₄) gel, thereby preparing paste for producing a photovoltaic film (a coating-fluid-like material preparation step). More specifically, the photocatalyst particles are suspended and kneaded in a mixture consisting of lithium silicate and the light-yellow aqueous solution. Meanwhile, when aqueous hydrogen peroxide is added, titanium hydroxide gel is transformed into titanium hydroxide sol. The paste serves as the photovoltaic film material. The paste is coated on a conductive glass plate (ITO) (that is, the conductive film on a conductive glass plate on which a conductive film serving as an electrode is disposed) with use of a spray gun, and dried, thereby preparing a photovoltaic film. The coating operation of the paste onto the conductive glass corresponds to a coating step.

Meanwhile, the paste may be merely coated on a conductive glass plate and dried; alternatively, the paste may be baked after being coated on a conductive glass plate and dried. This baking operation corresponds to the baking step. Conditions for performing such baking are 480 Celsius, in an inert atmosphere, and for one hour. In the case where such baking operation is performed, titanium hydroxide serving as a binder is transformed to titanium dioxide through baking; accordingly, in a stage of being formed into a photovoltaic film, the photovoltaic film can be said to be formed from the photocatalyst-coated particles and titanium dioxide particles. Meanwhile, in the above description, the baking operation is performed at 480°C for one hour; however, no limitation is imposed thereon, and an essential requirement for the baking temperature is to be, e.g., 200°C or higher, and more preferably, the baking temperature falls within the range of 200°C to 700°C. In addition, an essential requirement for the baking time is to fall, e.g., within the range of thirty minutes to three hours.

Also in the third embodiment, as in the case of the first embodiment or second embodiment, in the above manufacturing method, the amount of titanium dioxide particles coated on the surface of selenium red particles can be adjusted by means of adjusting the concentration of the titanium hydroxide sol in the light-yellow aqueous solution. In addition, the amount of titanium dioxide particles coated on the surface of selenium red particles can also be adjusted by means of adjusting the concentration of the selenium red in a dispersion solution in which powder of the inorganic material particles (more specifically, powder of selenium red) is dispersed.

In addition, also in the case where the light-yellow aqueous solution synthesized by means of adding aqueous hydrogen peroxide into titanium hydroxide (Ti(OH)₄) gel is used as a binder, coating strength of the photovoltaic film can be adjusted by means of adjusting the concentration of titanium hydroxide sol in the light-yellow aqueous solution.

In addition, the amount of titanium dioxide particles in the photovoltaic film can also be adjusted by means of adjusting the amount of the photocatalyst-coated particles in relation to the mixture when the photocatalyst-coated particles are suspended and kneaded in the mixture constituted of the light-yellow aqueous solution (specific gravity: about 1.3, solid content: 2%) having been synthesized by means of adding aqueous hydrogen peroxide to titanium hydroxide (Ti(OH)₄) gel, and lithium silicate.

Meanwhile, in the above manufacturing method, selenium red is adopted as an inorganic material; however, there may be adopted another metal oxide or another inorganic pigment, or a metal (that is, a metal material may be adopted).

Meanwhile, a solar cell employing the photovoltaic film of the present embodiment has the same basic configuration as that in the related art, and is configured, e.g., as shown in Fig. 1. More specifically, on a solar cell A of the present embodiment, a photovoltaic film (may alternatively be referred to as a coating) 30 of the above configuration is disposed. The working effects of the photovoltaic film of the present embodiment are the same as those of the first embodiment and those of the second embodiment. More specifically, selenium red particles in the photocatalyst-coated particles function as a sensitizing dye. When light impinges on the selenium red particles, the selenium red is excited in terms of energy, and the thus-generated excitation energy is transmitted in the form of electrons to the titanium dioxide particles which coat the selenium red. The electrons are sequentially transmitted from one titanium dioxide particle to another, thereby reaching a conductive glass plate 10, to thus be transferred to a conductive glass plate 20 on the counter electrode. The mechanism allows delivery of electric power at this time. The electrons having been transferred to the counter electrode subsequently return to the sensitizing dye or to the titanium dioxide particles by way of a redox reaction in the electrolytic solution. It can be said that an electromotive force is obtained through repetition of this cycle.

Next, functionality of a solar cell employing the photovoltaic film of the third embodiment will be briefly explained. Functionality of the solar cell employing the photovoltaic film of the third embodiment will be described with use of a platinum conductive glass as a counter electrode of an electrode on which the photovoltaic film is coated, and with use of 0. 5M LiI, 0. 05M I₂,0.4M 4-tertialy-butylpyridine, 0.5MDMPII, 3-metoxy acetonitril(solvent) as an electrolyte. Generation of an electromotive force is ascertained under irradiation of artificial sunlight with use of the platinum conductive glass as a counter electrode of the electrode on which the photovoltaic film is coated. As a result, a constant electromotive force is obtained irrespective of whether or not the photovoltaic film is subjected to baking operation; and a correlation diagram between electric current and voltage indicates characteristics of a battery.

In addition, the solar cell of the present embodiment generates an electromotive force for a certain duration even after being placed in a light-shielded condition. This seems to be ascribable to capabilities of lithium particles in the photovoltaic film.

As described above, since the photovoltaic film and the photovoltaic film material of the solar cell in the present embodiment are manufactured in accordance with the above-described manufacturing process, and can employ an inexpensive material, such as selenium red, a photovoltaic film can be manufactured at low cost. In addition, since an organic substance is not employed in the photovoltaic film and the photovoltaic film material, problems arising from employment of a sensitizing dye constituted of an organic substance (e.g., problems with regard to a useful life and light resistance of the sensitizing dye, and a problem of discoloration of a sensitizing dye caused by moisture) will be prevented. Furthermore, in the case where the photovoltaic film material of the present embodiment is employed, a consistent result can be obtained from formation of a photovoltaic film, irrespective of whether or not baking operation is performed; accordingly, a baking step can be omitted from formation of a photovoltaic film, thereby enabling reduction of manufacturing cost also in this regard.

In addition, in the present embodiment, since the aqueous solution of lithium chloride is employed in manufacture of the photovoltaic film material, absorption of titanium hydroxide into selenium red can be enhanced, thereby enabling sufficient coating of the titanium hydroxide onto the selenium red. In addition, since the photovoltaic film material includes the lithium particles, the presence of the lithium particles enables maintenance of an electromotive force even under a light-shielded condition.

Meanwhile, the respective embodiments have been described as using the light-yellow aqueous solution―having been synthesized by means of addition of aqueous hydrogen peroxide into titanium hydroxide (Ti(OH)₄) gel―whose concentration is 2%; however, the concentration may be higher or lower than this. In addition, in the description a spray gun is employed for coating operation; however, another method may be adopted. In addition, as the conductive glass plate, a type which employs an ITO film is used; however, another type of a conductive glass plate may be adopted. In the above description, a photovoltaic film is to be formed on a conductive film―which is disposed on a conductive glass plate and which serves as an electrode―however, the photovoltaic film may be formed on another type of a conductive membrane, such as a conductive film.

Meanwhile, the respective embodiments have been described with use of, as examples of a binder for producing a paste-like photovoltaic film material, those described above; however, another type of a binder may be adopted.

In addition, the respective embodiments have been provided on the assumption that a baking operation in the baking step is performed in an inert atmosphere; however, no limitation is imposed thereon, and the baking operation may be performed in, e.g., an oxidizing atmosphere.

In addition, a lithium chloride aqueous solution is added in preparation of the photocatalyst-coated particles in the first to third embodiments; however, this addition may be omitted. In such a case, the photovoltaic film material includes no lithium particles.

Meanwhile, in the descriptions of the respective embodiments, the photovoltaic film material is paste-like; however, the photovoltaic film material is not limited to being paste-like, and an essential requirement is to be coating-fluid-like. More specifically, the photovoltaic film material does not necessarily have high viscosity, so long as it has characteristics of coating-fluid. In relation to the above, the expression "being coating-fluid-like" encompasses a state of having viscosity to a degree which allows coating, which encompasses a paste-like state. In addition, in the above descriptions, mean particle sizes, specific gravities, and the like, of the respective particles have been defined; however, no limitation is imposed on the defined means particle sizes, specific gravities, and the like.

### Industrial Applicability

A photovoltaic film material, a method for manufacturing a photovoltaic film material, and a method for manufacturing a photovoltaic film according to the invention are suitable for use in a photovoltaic film employed in a solar cell. In addition, a photovoltaic film material, a method for manufacturing solar cell and a photovoltaic film material, and a method for manufacturing a photovoltaic film according to the invention are suitable for use in a solar cell to be used in a light-shielded condition.

## Claims

1. A photovoltaic film material for use in a photovoltaic film to be disposed in a solar cell, comprising photocatalyst-coated particles including:
inorganic material particles which are particles of an inorganic material;
photocatalyst particles which are coated on the surface of said inorganic material particles; and
lithium particles attached onto said inorganic material particles and/or said photocatalyst particles.

2. The photovoltaic film material defined in claim 1, wherein said photocatalyst-coated particles are obtained by means of:
producing a mixture in which an aqueous solution obtained by means of mixing titanium hydroxide gel and aqueous hydrogen peroxide,powder consisting ofsaidinorganic materialparticles, and water are mixed;
leaving to stand a second mixture obtained by means of mixing said mixture, and lithium chloride or a lithium chloride aqueous solution, thereby forming a product material in which titanium hydroxide is coated on at least the surface of said inorganic material particles; and
baking said product material.

3. The photovoltaic film material defined in claim 1 or 2, wherein said inorganic material which constitutes said inorganic material particles is an inorganic pigment or a metal oxide.

4. The photovoltaic film material defined in claim 1, 2, or 3, wherein said photocatalyst particles are titanium dioxide particles.

5. The photovoltaic film material defined in claim 1, 2, 3, or 4, further comprising a binder, wherein said photovoltaic film material is formed into a coating fluid.

6. The photovoltaic film material defined in claim 1, 2, 3, 4, or 5, wherein said binder is any one of:
an aqueous solution obtained by means of mixing titanium hydroxide gel and aqueous hydrogen peroxide;
a mixture of an aqueous solution obtained by means of mixing titanium hydroxide gel and aqueous hydrogen peroxide, and a lithium silicate aqueous solution; and
lithium silicate.

7. A solar cell including a photovoltaic film, wherein said photovoltaic film has photocatalyst-coated particles including:
inorganic material particles which are particles of an inorganic material;
photocatalyst particles which are coated on the surface of said inorganic material particles; and
lithium particles attached onto said inorganic material particles and/or said photocatalyst particles.

8. The solar cell defined in claim 7, wherein said photocatalyst-coated particles are obtained by means of:
producing a mixture in which an aqueous solution obtained by means of mixing titanium hydroxide gel and aqueous hydrogen peroxide, powder consisting of said inorganic material particles, and water are mixed;
leaving to stand a second mixture obtained by means of mixing said mixture, and lithium chloride or a lithium chloride aqueous solution, thereby forming a product material in which titanium hydroxide is coated on at least the surface of said inorganic material particles; and
baking said product material.

9. The solar cell defined in claim 7 or 8, wherein said photovoltaic film further comprises titanium dioxide which has been transformed from titanium hydroxide by means of baking a coating-fluid-like product material obtained by means of kneading said photocatalyst-coated particles into an aqueous solution having been obtained by means of mixing titanium hydroxide gel and aqueous hydrogen peroxide.

10. The solar cell defined in claim 7, 8, or 9, wherein said inorganic material which constitutes said inorganic material particles is an inorganic pigment or a metal oxide.

11. The solar cell defined in claim 7, 8, 9, or 10, wherein said photovoltaic film further comprises a binder.

12. The solar cell defined in claim 11, wherein said binder is any one of:
an aqueous solution obtained by means of mixing titanium hydroxide gel and aqueous hydrogen peroxide;
a mixture of an aqueous solution obtained by means of mixing titanium hydroxide gel and aqueous hydrogen peroxide, and a lithium silicate aqueous solution; and
lithium silicate.

13. A method for manufacturing a photovoltaic filmmaterial for use in a photovoltaic film to be disposed in a solar cell, comprising:
a first-mixture preparation step of producing a first mixture in which an aqueous solution obtained by means of mixing titanium hydroxide gel and aqueous hydrogen peroxide, powder consisting of inorganic material particles, which are particles of an inorganic material, and water are mixed;
a second-mixture preparation step of producing a second mixture by means of mixing lithium chloride or a lithium chloride aqueous solution into said mixture produced in said first-mixture preparation step;
a production-material formation step of leaving to stand said second mixture produced in said second-mixture preparation step, thereby forming a product material in which titanium hydroxide is coated on at least the surface of said inorganic material particles; and
a baking step of baking said product material formed in said product-material formation step, thereby producing a photovoltaic film material.

14. A method for manufacturing a photovoltaic filmmaterial for use in a photovoltaic film to be disposed in a solar cell, comprising:
a production-material formation step of producing an aqueous solution having titanium hydroxide, powder consisting of inorganic material particles which are particles of an inorganic material, and lithium chloride, and leaving to stand the aqueous solution, thereby forming a precipitated product material; and
a baking step of baking said product material formed in said product-material formation step, thereby producing a photovoltaic film material.

15. The method for manufacturing a photovoltaic film material defined in claim 13 or 14, wherein said inorganic material which constitutes said inorganic material particles is an inorganic pigment, or a metal, or a metal oxide.

16. The method for manufacturing a photovoltaic film material defined in claim 13, 14, or 15, further comprising a coating-fluid-like-material production step of producing a coating-fluid-like photovoltaic film material by means of mixing said photovoltaic film material into an aqueous solution obtained by means of mixing titanium hydroxide gel and aqueous hydrogen peroxide.

17. The method for manufacturing a photovoltaic film material defined in claim 13, 14, or 15, further comprising a coating-fluid-like-material production step of producing a coating-fluid-like photovoltaic film material by means of mixing said photovoltaic film material into a lithium silicate aqueous solution.

18. The method for manufacturing a photovoltaic film material defined in claim 13, 14, or 15, further comprising a coating-fluid-like-material production step of producing a coating-fluid-like photovoltaic film material by means of mixing said photovoltaic film material into a mixture constituted of an aqueous solution obtained by means of mixing titaniumhydroxide gel and aqueous hydrogen peroxide, and lithium silicate.

19. A method for manufacturing a photovoltaic film to be disposed on a solar cell, comprising:
a coating step of coating a photovoltaic film material manufactured in accordance with said method for manufacturing a photovoltaic film material defined in claim 16, 17, or 18 onto a conductive film serving as an electrode; and
a baking step of baking a photovoltaic film material having been coated in said coating step.

20. A method for manufacturing a photovoltaic film to be disposed on a solar cell, comprising a coating step of coating a photovoltaic film material manufactured in accordance with said method for manufacturing a photovoltaic film material defined in claim 16, 17, or 18 onto a conductive film serving as an electrode.
